# EUROPEAN PATENT APPLICATION

(11) **EP 4 803 763 A1**
(43) Date of publication of application: **09.09.2026**
(21) Application number: 24885658.5
(22) Date of filing: 28.10.2024
(51) Int. Cl.: F16C 19/52, F16C 19/16, F16C 41/00, G01K 1/14, G01K 1/024, G06K 19/07

(54) **MACHINE COMPONENT AND MONITORING SYSTEM**

(30) Priority: 02.11.2023 JP 2023188749
(71) Applicant: NSK LTD., Tokyo 141-8560 (JP)
(72) Inventor: ABE, Daisuke, Fujisawa-shi, Kanagawa 251-8501 (JP); TANAKA, Sadayuki, Fujisawa-shi, Kanagawa 251-8501 (JP); KUWAHARA, Masaki, Fujisawa-shi, Kanagawa 251-8501 (JP); ENDOU, Shigeru, Fujisawa-shi, Kanagawa 251-8501 (JP); KONDOU, Masateru, Fujisawa-shi, Kanagawa 251-8501 (JP)
(74) Representative: SSM Sandmair
(86) International application number: PCT/JP2024/038339
(87) International publication number: WO 2025/094885

(57) **Abstract**

A machine component 40 includes a housing 41, a bearing 42 that is disposed in the housing 41 and rotatably supports a shaft member 31, a temperature sensor 43b that is disposed on an outer surface of the housing 41 and detects a temperature of the bearing 42, and a connection member 44 that has a thermal conductivity higher than a thermal conductivity of the housing 41, is disposed in the housing 41, and thermally connects the bearing 42 and the temperature sensor 43b.

## Description

### Field

The present disclosure relates to a machine component and a monitoring system.

### Background

Patent Literature 1 discloses a bearing unit for a conveyance device as an example of a machine component. The machine component of Patent Literature 1 includes a housing, a bearing disposed in the housing, a sensor that detects a situation of the bearing, and a transmitter that wirelessly transmits information detected by the sensor.

The bearing, the sensor, and the transmitter are disposed in the housing. The sensor is, for example, a temperature sensor, and detects a temperature of the bearing. When a state of the bearing changes, the temperature of the bearing rises and a bearing abnormality may occur. The machine component of Patent Literature 1 is capable of contributing to detecting the bearing abnormality based on the temperature detected by the temperature sensor.

### Citation List

### Patent Literature

Patent Literature 1: JP 2013-11312 A

### Summary

### Technical Problem

A machine component of Patent Literature 1 further includes a cover that covers a sensor (temperature detector) and a transmitter in a housing, and a seal member that prevents dust and the like from entering between the housing and the cover. As described above, in the machine component of Patent Literature 1, since the temperature detector and the like are provided inside the housing, the number of components increases, and it is difficult to simply configure the machine component. In order to accurately detect the bearing abnormality, it is desirable that the temperature detector accurately detects the temperature of the bearing.

An object of the present disclosure is to simplify a configuration and increase accuracy of a temperature detected by a temperature detector in a machine component including a bearing and the temperature detector that detects the temperature of the bearing, and a monitoring system including the machine component. Solution to Problem

A machine component according to an embodiment of the present disclosure includes: a housing; a bearing that is disposed in the housing and rotatably supports a shaft member; a temperature sensor that is disposed on an outer surface of the housing and detects a temperature of the bearing; and a connection member having a thermal conductivity higher than a thermal conductivity of the housing, the connection member being disposed in the housing and thermally connecting the bearing and the temperature sensor.

According to the present disclosure, the temperature sensor is arranged on an outer surface of the housing. Therefore, the configuration inside the housing and the configuration of the machine component can be simplified. In addition, the temperature sensor is thermally connected to the bearing via a connection member having a thermal conductivity higher than a thermal conductivity of the housing. Therefore, it is possible to increase the accuracy of a temperature detected by the temperature detector.

In the machine component according to an embodiment of the present disclosure, the connection member includes one or more types of metal selected from a group of pure copper, copper, aluminum, duralumin, gold, and silver.

According to the present disclosure, the connection member transmits heat of the bearing to the temperature sensor at an early stage. Therefore, it is possible to reliably increase the accuracy of the temperature detected by the temperature detector.

In the machine component according to an embodiment of the present disclosure, when the connection member is viewed from inside the bearing toward outside the bearing in a direction orthogonal to an axis of the bearing, the connection member overlaps with a portion of the bearing where a stress generated by a force acting from the shaft member is maximized.

In the bearing, when a state change progresses due to a load from a shaft member, the temperature increases at a portion where the state change progresses. In the bearing, a portion where the temperature is maximized corresponds to a portion where a stress is maximized by force acting by the shaft member. Further, the temperature sensor is thermally connected to the connection member. Thus, the temperature detected by the temperature sensor rises early according to a rise in the temperature of the bearing. Therefore, the machine component is capable of contributing to early detection of the bearing abnormality by the temperature detected by the temperature sensor.

In the machine component according to an embodiment of the present disclosure, a radio frequency identification (RFID) tag that is configured integrally with the temperature sensor and transmits a detection temperature of the temperature sensor to a reader writer.

According to the present disclosure, the machine component can output the temperature detected by the temperature sensor with a simple configuration.

A monitoring system according to the present disclosure includes: a machine device including a plurality of the machine components; the reader writer; and a terminal device that is electrically connected to the reader writer and stores the detection temperature of the temperature sensor.

According to the present disclosure, a reader writer acquires the temperature detected by the temperature sensor from a plurality of machine components in a short time. Thus, a terminal device can easily acquire the temperatures detected by a plurality of temperature sensors via the reader writer. Therefore, even when a monitoring system includes the plurality of machine components, it is possible to achieve early detection of the bearing abnormality with a simple configuration.

### Brief Description of Drawings

FIG. 1 is a diagram illustrating a configuration of a monitoring system.
FIG. 2 is a front view of a machine component.
FIG. 3 is a cross-sectional view of the machine component taken along line III-III in FIG. 2.
FIG. 4 is a plan view of a temperature detector.
FIG. 5 is an enlarged cross-sectional view of the temperature detector in FIG. 3.
FIG. 6 is a block diagram of an RFID tag.
FIG. 7 is a cross-sectional view of a temperature detector in a machine component according to a first modification of the embodiment of the present disclosure.
FIG. 8 is a cross-sectional view of a temperature detector in a machine component according to a second modification of the embodiment of the present disclosure.
FIG. 9 is a cross-sectional view of a temperature detector in a machine component according to a third modification of the embodiment of the present disclosure. Description of Embodiments

Hereinafter, embodiments according to the present disclosure will be described with reference to the drawings. However, the present disclosure is not limited thereto. Components in each embodiment and each modification described below can be appropriately combined. In addition, some components may not be used.

### <Monitoring system 1>

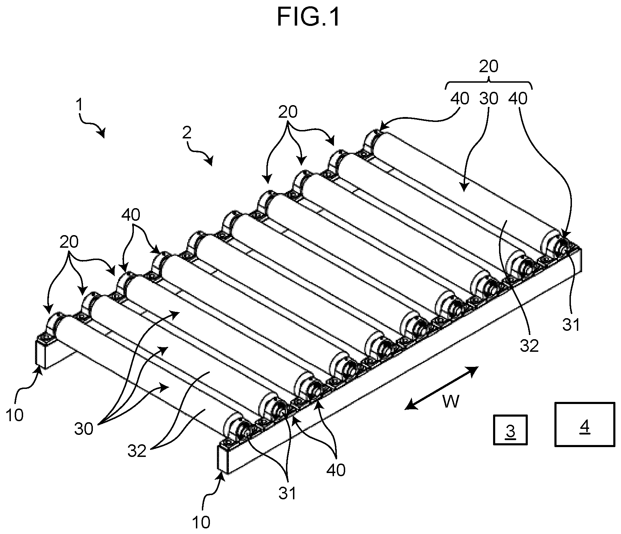

FIG. 1 is a diagram illustrating a configuration of a monitoring system 1. The monitoring system 1 is a system that monitors a machine component 40 including a bearing 42 described later. The monitoring system 1 includes a machine device 2, a reader writer 3, and a terminal device 4. The monitoring system 1 may include a plurality of machine devices 2.

The machine device 2 is a roller conveyor that conveys an industrial product in a conveyance direction W. The machine device 2 includes a pair of support bases 10 and a plurality of roller devices 20. In the present embodiment, the number of the roller devices 20 is 10 pieces, but it is apparent that the number is not limited to 10.

The pair of support bases 10 support the plurality of roller devices 20. The pair of support bases 10 have a rectangular parallelepiped shape extending in the conveyance direction W.

Each of the roller devices 20 includes a roller member 30 and a pair of machine components 40.

The roller member 30 includes a shaft member 31 and a roller 32. The shaft member 31 has a columnar shape extending along a central axis.

The roller 32 has a cylindrical shape disposed on a peripheral side surface of the shaft member 31, and rotates integrally with the shaft member 31. Both ends of the shaft member 31 are exposed from the roller 32.

The pair of machine components 40 support the roller member 30 in a relatively rotatable manner. Specifically, the pair of machine components 40 support both ends of the shaft member 31 in a relatively rotatable manner. The machine component 40 is a plummer block. The machine component 40 includes a bearing 42 described later and a radio frequency identification (RFID) tag 43a integrally configured with a temperature sensor 43b. Details of the machine component 40 will be described later.

The pair of machine components 40 are fixed to the pair of support bases 10 using, for example, fixing bolts, whereby the plurality of roller devices 20 are supported by the pair of support bases 10. The plurality of roller devices 20 is arranged in a state that central axes of the shaft members 31 are parallel to each other and the central axes of the shaft members 31 are orthogonal to the conveyance direction W.

The reader writer 3 performs wireless communication with the RFID tag 43a included in the machine component 40. The reader writer 3 can be carried by a user. The reader writer 3 is electrically connected to the terminal device 4 in a wired or wireless manner.

The user operates the reader writer 3 to transmit a carrier wave from the reader writer 3 toward the RFID tag 43a. In response to the above, the RFID tag 43a transmits a temperature detected by the temperature sensor 43b (hereinafter referred to as a detected temperature of the temperature sensor 43b) to the reader writer 3. The reader writer 3 acquires the detected temperature of the temperature sensor 43b, and transmits the detected temperature to the terminal device 4.

The reader writer 3 can perform wireless communication simultaneously with a plurality of RFID tags 43a. Therefore, the reader writer 3 can acquire the detected temperatures of a plurality of temperature sensors 43b in a relatively short time. The reader writer 3 transmits detected temperatures of the plurality of temperature sensors 43b to the terminal device 4.

The terminal device 4 is a computer and includes, for example, a central processing unit (CPU), a read only memory (ROM), a random access memory (RAM), an internal storage unit, an input interface, and an output interface. The CPU, the ROM, the RAM, and the internal storage unit are connected by an internal bus. The ROM stores a program such as BIOS. The internal storage unit is, for example, a hard disk drive (HDD) or a flash memory, and stores an operating system program and an application program. The CPU realizes various functions by executing a program stored in the ROM or the internal storage unit while using the RAM as a work area.

The terminal device 4 acquires the detected temperature of the temperature sensor 43b from the reader writer 3. The terminal device 4 detects an abnormality of the bearing 42, based on the detected temperature of the temperature sensor 43b, before a failure of the bearing 42 occurs in the machine component 40.

The abnormality of the bearing 42 occurs when a state of the bearing 42 changes (e.g., secular change) due to the load acting from the shaft member 31. When the abnormality of the bearing 42 is overlooked, the bearing 42 fails, and the machine component 40 fails. In other words, the terminal device 4 detects the abnormality of the bearing 42 that occurs before the bearing 42 fails.

As the state of the bearing 42 changes, the detected temperature of the temperature sensor 43b increases (details will be described later). When the detected temperature of the temperature sensor 43b is equal to or higher than a predetermined temperature, the terminal device 4 determines that there is an abnormality in the bearing 42. The user examines the machine component 40 determined to have the abnormality based on a determination result of the terminal device 4.

The user can find the abnormality of the bearing 42 at an early stage by periodically checking the detected temperature of the temperature sensor 43b by the terminal device 4.

As described above, according to the present embodiment, the monitoring system 1 includes the machine device 2 having the plurality of machine components 40, the reader writer 3, and the terminal device 4 electrically connected to the reader writer 3 and storing the detected temperature of the temperature sensor 43b.

According to the present embodiment, the reader writer 3 acquires the detected temperature of the temperature sensor 43b from the plurality of machine components 40 in a relatively short time. Therefore, the terminal device 4 can easily acquire the detected temperatures of the plurality of temperature sensors 43b via the reader writer 3. Thus, even when the monitoring system 1 includes the plurality of machine components 40, it is possible to detect the abnormality of the bearing 42 early with a simple configuration.

### <Machine component 40>

In the following description, a Z direction illustrated in the drawings is a vertical direction of the machine component 40, an X direction is a left-right direction of the machine component 40, and a Y direction is a front-rear direction of the machine component 40. The X direction, the Y direction, and the Z direction are orthogonal to each other. Note that the X, Y, and Z directions are examples, and the present disclosure is not limited to these directions.

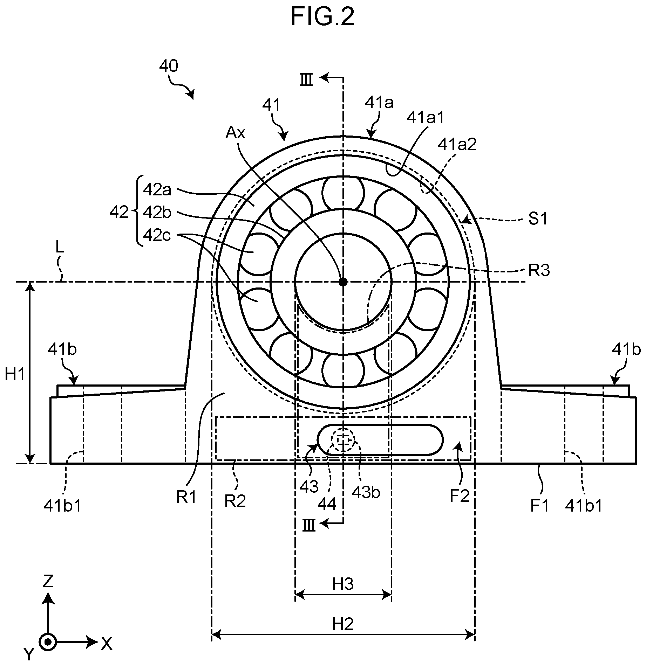

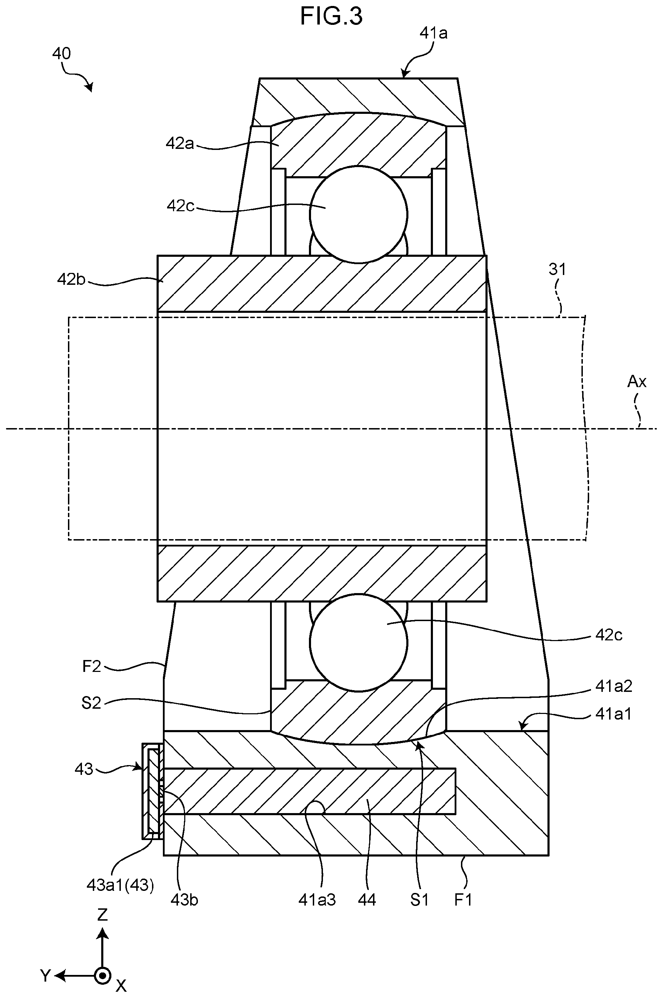

FIG. 2 is a front view of the machine component 40. FIG. 3 is a cross-sectional view of the machine component 40 taken along line III-III in FIG. 2. The machine component 40 includes a housing 41, the bearing 42, a temperature detector 43, and a connection member 44.

The housing 41 integrally includes a main body 41a and a flange 41b. The main body 41a has a first through hole 41a1 through which the shaft member 31 passes.

The flange 41b is provided on both sides of the main body 41a in the X direction. The flange 41b has a second through hole 41b1 through which a bolt for mounting the machine component 40 onto the support base 10 passes.

A lower surface (surface on a -Z side) of the housing 41 corresponds to a mounting surface F1 in contact with the support base 10. The mounting surface F1 is flat. The mounting surface F1 is orthogonal to the Z direction. In a state that the machine component 40 is mounted onto the support base 10, the Z direction is substantially parallel to a gravity direction. Therefore, the mounting surface F1 is substantially orthogonal to the gravity direction and faces downward in the gravity direction in the state that the machine component 40 is mounted onto the support base 10.

The bearing 42 is disposed in the housing 41 and rotatably supports the shaft member 31 with respect to the housing 41. An axis Ax of the bearing 42 extends in the Y direction. In other words, the axis Ax of the bearing 42 is substantially orthogonal to the gravity direction in the state that the housing 41 is mounted onto the support base 10. Note that, in the present specification, inclination of the axis Ax with respect to the gravity direction includes that the axis Ax is orthogonal to the gravity direction. The axis Ax of the bearing 42 is substantially parallel to the central axis of the shaft member 31.

The bearing 42 is a ball bearing. The bearing 42 may be a roller bearing. The bearing 42 is disposed in the first through hole 41a1. The bearing 42 includes an outer ring 42a, an inner ring 42b, and a plurality of balls 42c.

The outer ring 42a is fitted into an annular groove 41a2 on an inner peripheral surface of the first through hole 41a1. The outer ring 42a is fixed to the housing 41. The inner ring 42b is inside the outer ring 42a. The shaft member 31 is fixed to the inner ring 42b in an integrally rotatable manner. The plurality of balls 42c is arranged between the outer ring 42a and the inner ring 42b.

When the shaft member 31 rotates with respect to the housing 41, the inner ring 42b rotates with respect to the outer ring 42a. At this time, the plurality of balls 42c roll with respect to the outer ring 42a and the inner ring 42b.

The temperature detector 43 is disposed on an outer surface of the housing 41. The temperature detector 43 detects the temperature of the bearing 42 (details will be described later). The temperature detector 43 is disposed on a front surface F2 (surface on a +Y side) of the outer surface of the housing 41.

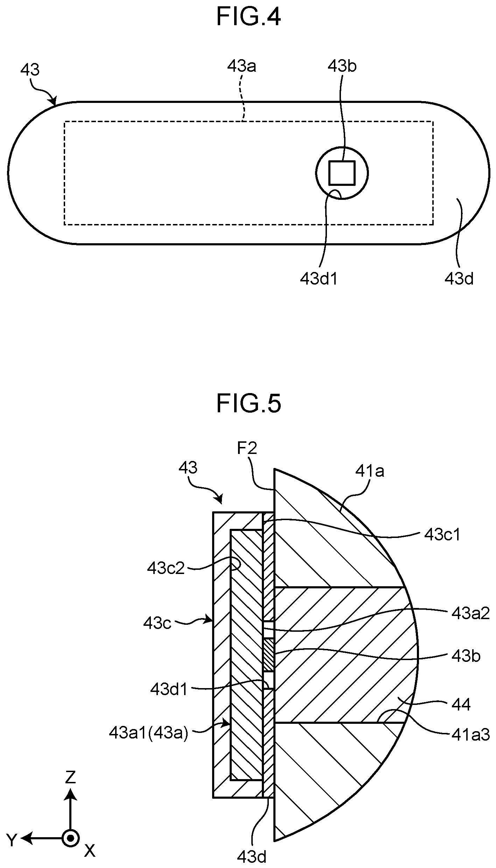

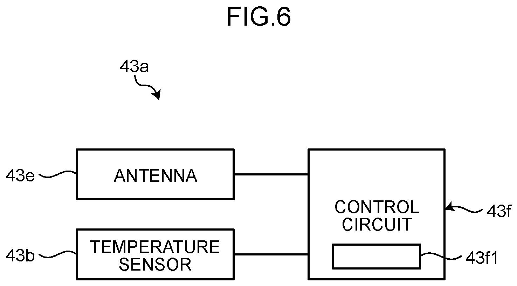

FIG. 4 is a plan view of the temperature detector 43. FIG. 5 is an enlarged cross-sectional view of the temperature detector 43 illustrated in FIG. 3. FIG. 6 is a block diagram of the RFID tag 43a.

The temperature detector 43 includes the RFID tag 43a, the temperature sensor 43b, a cover 43c, and an adhesive member 43d. The RFID tag 43a is configured integrally with the temperature sensor 43b.

The RFID tag 43a is a passive RFID tag. The RFID tag 43a includes a substrate 43a1 illustrated in FIG. 5. As a base material of the substrate 43a1, a resin base material, a ceramic base material, a plastic base material, or the like is used. A conductive portion of the substrate 43a1 is formed by performing metal plating on a surface of the base material. Note that the conductive portion may be formed of a conductive foil. Still more, the conductive portion may be formed by screen printing, inkjet printing, or the like, using a polymer conductive ink. On the substrate 43a1, the temperature sensor 43b, an antenna 43e illustrated in FIG. 6, and a control circuit 43f are arranged.

As illustrated in FIG. 5, the temperature sensor 43b is disposed on a main surface 43a2 of the substrate 43a1. The temperature sensor 43b detects the temperature of the bearing 42. The temperature sensor 43b is thermally connected to the bearing 42 via the connection member 44 illustrated in FIGS. 3 and 5. The temperature sensor 43b is in contact with the connection member 44. The detected temperature of the temperature sensor 43b corresponds to a detected temperature of the temperature detector 43.

The connection member 44 is solid. The connection member 44 has a columnar shape. The connection member 44 contains one or more types of metal selected from a group of pure copper, copper, aluminum, duralumin, gold, and silver.

A thermal conductivity of the connection member 44 is higher than a thermal conductivity of the housing 41. The thermal conductivity of the connection member 44 is approximately from 160 (W/m•K) to 390 (W/m•K). On the other hand, a material of the housing 41 includes cast iron or carbon steel. The thermal conductivity of the housing 41 is approximately from 35 (W/m•K) to 55 (W/m•K). It is apparent that the material of the connection member 44 and the material of the housing 41 are not limited to the above materials. Still more, it is apparent that the thermal conductivity of the connection member 44 and the thermal conductivity of the housing 41 are not limited to the above thermal conductivity.

The connection member 44 is disposed in a hole 41a3 of the housing 41. The hole 41a3 has an opening on the front surface F2. An outer surface of the connection member 44 is in contact with an inner side surface of the hole 41a3. The connection member 44 is also in contact with the temperature sensor 43b. As a result, the temperature of the housing 41 is transmitted to the temperature sensor 43b via the connection member 44.

The connection member 44 is located on the -Z side from the axis Ax of the bearing 42 in the housing 41. Specifically, the connection member 44 is located in an arrangement region R1 of the housing 41 illustrated in FIG. 2. The arrangement region R1 corresponds to a region where a range H1 between an imaginary line L passing the axis Ax of the bearing 42 and parallel to the X direction and the mounting surface F1, and a range H2 of the bearing 42 in the X direction overlap with each other at the front surface F2 illustrated in FIG. 2. Still more, the connection member 44 is located in a first partial region R2 on the -Z side from an outer peripheral surface of the bearing 42 in the Y direction of the arrangement region R1.

Further, in the present embodiment, the connection member 44 is located in a region where the first partial region R2 and a second partial region R3 overlap. The second partial region R3 is a region occupied by a range H3 on the -Z side from the inner peripheral surface of the inner ring 42b in the machine component 40.

In a state where the housing 41 is mounted onto the support base 10 as described above, the mounting surface F1 of the housing 41 is substantially orthogonal to the gravity direction and faces downward in the gravity direction. Therefore, when the housing 41 is viewed in an axis direction of the bearing 42 in the state that the housing 41 is mounted onto the support base 10, the connection member 44 is located below the axis Ax of the bearing 42 in the gravity direction. The axis direction of the bearing 42 is a direction in which the axis Ax extends.

A control circuit 43f illustrated in FIG. 6 is electrically connected to the temperature sensor 43b and the antenna 43e. The antenna 43e receives a carrier wave from the reader writer 3. A known structure is applied to the antenna 43e. For example, a structure of a reverse F-shaped antenna described in JP 4990858 B2 is applicable to the antenna 43e. In this case, the antenna 43e can communicate even when the temperature detector 43 is attached to a surface of a metal member. The control circuit 43f is driven by power generated by the carrier wave.

The control circuit 43f acquires the detected temperature of the temperature sensor 43b and stores the detected temperature acquired in a storage area 43f1. The control circuit 43f transmits the detected temperature of the temperature sensor 43b stored in the storage area 43f1 to the reader writer 3 via the antenna 43e.

In addition, the control circuit 43f transmits identification information (e.g., identification number) for identifying the machine component 40 in association with the detected temperature of the temperature sensor 43b to the reader writer 3. The identification information is stored in advance in the storage area 43f1 by the reader writer 3. The terminal device 4 stores the detected temperature of the temperature sensor 43b and the identification information in association with each other. Therefore, the terminal device 4 can specify the machine component 40 determined to have the abnormality in the bearing 42.

Note that an IC chip on which the temperature sensor 43b is mounted can be used as the control circuit 43f. In this case, the control circuit 43f is integrated with the temperature sensor 43b. Therefore, the RFID tag 43a can be downsized.

The cover 43c illustrated in FIG. 5 protects the RFID tag 43a. The cover 43c has a flat plate shape including an arrangement surface 43c1. The arrangement surface 43c1 is flat. The arrangement surface 43c1 has a recess 43c2 in which the RFID tag 43a is disposed. In a plan view of the cover 43c, the recess 43c2 is located at a center of the cover 43c.

In addition, in a state that the RFID tag 43a is disposed in the recess 43c2, the arrangement surface 43c1 of the cover 43c and the main surface 43a2 of the substrate 43a1 are on the same plane. In other words, in the state that the RFID tag 43a is disposed in the recess 43c2, the arrangement surface 43c1 exists over an entire circumference around the main surface 43a2 of the substrate 43a1. Note that the arrangement surface 43c1 of the cover 43c and the main surface 43a2 of the substrate 43a1 may be on different planes. Further, the temperature sensor 43b protrudes from the arrangement surface 43c1 in a state that the RFID tag 43a is disposed in the recess 43c2.

A material of the cover 43c is thermoplastic resin. Specifically, the material of the cover 43c is nylon resin having waterproofness and oil resistance. Therefore, the cover 43c is waterproofed and oil resistant. The fact that the cover 43c is waterproofed and oil resistant means that, during a use period of the machine component 40, a property change of the cover 43c caused by water or oil and grease used for the machine component 40 is suppressed, and a problem does not occur in the operation of the temperature sensor 43b and the RFID tag 43a.

The adhesive member 43d is disposed on the arrangement surface 43c1 of the cover 43c, and bonds the RFID tag 43a and the cover 43c to the outer surface (front surface F2) of the housing 41. The adhesive member 43d is also disposed on the main surface 43a2 of the substrate 43a1. The adhesive member 43d has a third through hole 43d1 in which the temperature sensor 43b is located. The third through hole 43d1 is connected to the hole 41a3.

The adhesive member 43d is a double-sided tape. The adhesive member 43d is waterproofed. The adhesive member 43d is a so-called waterproof tape. The fact that the adhesive member 43d is waterproofed means that, during the use period of the machine component 40, a property change of the adhesive member 43d caused by water is suppressed, and a problem does not occur in the operation of the temperature sensor 43b and the RFID tag 43a.

Still more, the adhesive member 43d is arranged on the arrangement surface 43c1 of the cover 43c over the entire circumference around the RFID tag 43a. Therefore, water tightness is secured between the cover 43c and the outer surface of the housing 41, and water adhesion to the temperature sensor 43b and the RFID tag 43a is suppressed.

Next, the operation of the machine component 40 when the abnormality occurs in the bearing 42 will be described.

When the machine device 2 illustrated in FIG. 1 conveys the industrial product, a downward force in the gravity direction acts on the bearing 42 from the shaft member 31. A frictional force is generated between the ball 42c and the inner ring 42b and between the ball 42c and the outer ring 42a by the force from the shaft member 31. When the state change of the bearing 42 progresses due to the frictional force, an abnormality such as a damage to the bearing 42 may occur. As the abnormality of the bearing 42 progresses, a failure such as seizure of the bearing 42 occurs.

Still more, when the state change of the bearing 42 progresses due to the frictional force, the temperature of the bearing 42 increases. In the bearing 42, a portion where temperature is maximized is same as a portion where the frictional force is maximized, i.e., a portion where a stress generated by the force acting from the shaft member 31 is maximized.

In the present embodiment, a downward force in the gravity direction (-Z side in the Z direction) acts on the bearing 42 from the shaft member 31. Therefore, in the bearing 42, the portion where the stress generated by the force acting from the shaft member 31 is maximized, i.e., the portion having the highest temperature overlaps with the second partial region R3 in FIG. 2.

The temperature of the bearing 42 is transmitted to the housing 41. A portion having the highest temperature in the housing 41 is a portion in contact with the portion having the highest temperature in the bearing 42, and this portion overlaps with the second partial region R3 in FIG. 2.

The connection member 44 is disposed on the portion of the housing 41 overlapping with the second partial region R3. When the connection member 44 is viewed from inside the bearing 42 toward outside the bearing 42 in a direction orthogonal to the axis Ax of the bearing 42, the connection member 44 overlaps with the portion of the bearing 42 where the stress generated by the force acting from the shaft member 31 is maximized.

The temperature of the housing 41 is transmitted to the connection member 44. By providing the connection member 44 in the second partial region R3, the highest temperature of the housing 41 is transmitted to the connection member 44.

Furthermore, as described above, the temperature sensor 43b is thermally connected to the connection member 44. Therefore, the temperature sensor 43b detects the temperature of the portion having the highest temperature in the bearing 42 via the connection member 44 and the housing 41. Therefore, the detected temperature of the temperature sensor 43b rises early according to the temperature rise of the bearing 42. Still more, the temperature sensor 43b is thermally connected to the bearing 42 via the connection member 44 and the housing 41, and thus accurately detects the temperature of the bearing 42.

The detected temperature of the temperature sensor 43b is stored in the terminal device 4 via the reader writer 3 as described above. Further, when the detected temperature of the temperature sensor 43b is equal to or higher than a predetermined temperature, the terminal device 4 determines that there is an abnormality in the bearing 42. Therefore, since the temperature sensor 43b is thermally connected to the bearing 42 via the connection member 44, the abnormality of the bearing 42 can be detected at an early stage.

As described above, according to the present embodiment, the machine component 40 further includes the housing 41, the bearing 42 that is disposed in the housing 41 and rotatably supports the shaft member 31, the temperature sensor 43b that is disposed on the outer surface of the housing 41 and detects the temperature of the bearing 42, and the connection member 44 that has the thermal conductivity higher than the thermal conductivity of the housing 41, is disposed in the housing 41, and thermally connects the bearing 42 and the temperature sensor 43b.

According to the present embodiment, the temperature sensor 43b is disposed on the outer surface of the housing 41. Therefore, the configuration inside the housing 41 and the configuration of the machine component 40 can be simplified. Still more, the temperature sensor 43b is thermally connected to the bearing 42 via the connection member 44 having the thermal conductivity higher than the thermal conductivity of the housing 41. Therefore, it is possible to increase the accuracy of the detected temperature of the temperature detector 43.

Further, the connection member 44 contains one or more types of metal selected from the group of pure copper, copper, aluminum, duralumin, gold, and silver.

Accordingly, the connection member 44 transmits the heat of the bearing 42 to the temperature sensor 43b early. Therefore, it is possible to reliably increase the accuracy of the detected temperature of the temperature detector 43.

When the connection member 44 is viewed from inside the bearing 42 toward outside the bearing 42 in the direction orthogonal to the axis Ax of the bearing 42, the connection member 44 overlaps with the portion of the bearing 42 where the stress generated by the force acting from the shaft member 31 is maximized.

In the bearing 42, the portion where the stress generated by the force acting from the shaft member 31 is maximized corresponds to the portion having the highest temperature. Still more, the temperature sensor 43b is in thermal contact with the connection member 44. Therefore, the detected temperature of the temperature sensor 43b rises early according to the temperature rise of the bearing 42 and the temperature rise of the housing 41. Therefore, the machine component 40 can contribute to early detection of the abnormality of the bearing 42 by the detected temperature of the temperature sensor 43b.

Still more, the machine component 40 includes the RFID tag 43a that is configured integrally with the temperature sensor 43b and transmits the detected temperature of the temperature sensor 43b to the reader writer 3.

According to the present embodiment, the machine component 40 can output the detected temperature of the temperature sensor 43b with a simple configuration.

Next, the monitoring system 1 and the machine component 40 according to a modification of the embodiment of the present disclosure will be described mainly with respect to a point that differs from the monitoring system 1 and the machine component 40 according to the above embodiment.

For example, the machine device 2 is not limited to the roller conveyor. The machine device 2 only needs to include a plurality of machine components 40 each including the bearing 42.

Still more, the machine component 40 is not limited to the plummer block. The machine component 40 only needs to include the bearing 42.

Still more, the RFID tag 43a may be an active RFID tag. In this case, the RFID tag 43a further includes a power source.

Further, the adhesive member 43d may have elasticity. In this case, the adhesive member 43d has, for example, a sheet-like base material having elasticity and an adhesive layer disposed on both surfaces of the base material. The base material is formed of, for example, foamed resin such as foamed polyethylene. When the machine device 2 is operating, vibrations transmitted from the housing 41 to the temperature sensor 43b and the RFID tag 43a can be suppressed by the elasticity of the adhesive member 43d.

Still more, the adhesive member 43d may be cured adhesive (e.g., epoxy adhesive). Still more, the adhesive member 43d may be a butyl tape that is waterproofed and oil resistant.

Still more, the temperature detector 43 may not include the adhesive member 43d. In this case, the temperature detector 43 is fixed to the housing 41 by, for example, a bolt.

Still more, the cover 43c may have a shape that partially covers the main surface 43a2 of the substrate 43a1 in a state that the temperature sensor 43b is exposed.

Further, the arrangement region R1 may be located, on the front surface F2 of the housing 41, at a position other than the -Z side from the axis Ax of the bearing 42. For example, the arrangement region R1 may be located at a position other than the -Z side from the axis Ax of the bearing 42.

The shape of the connection member 44 is not limited to the columnar shape, and may have a spherical shape or a bent shape. Further, the connection member 44 of the bearing 42 may be located at a position other than the -Z side from the axis Ax of the bearing 42. For example, the position of the connection member 44 varies depending on an attitude of the machine component 40 mounted onto the support base 10. For example, when the mounting surface F1 is orthogonal to the gravity direction and faces upward in the gravity direction in the state that the machine component 40 is mounted onto the support base 10, the portion of the bearing 42 where the stress generated by the force acting from the shaft member 31 is maximized (i.e., portion having the highest temperature) is on the +Z side from the axis Ax of the bearing 42. Therefore, the connection member 44 is located on the +Z side from the axis Ax of the bearing 42 in the housing 41. In this case, the hole 41a3 and the temperature sensor 43b are located on the +Z side from the axis Ax of the bearing 42 in the housing 41. Still more, the position of the connection member 44 varies depending on the direction of the load acting on the bearing 42 from the shaft member 31. For example, when the direction of the load acting on the bearing 42 from the shaft member 31 is a direction from the -X side to the +X side in the X direction, the portion of the bearing 42 where the stress generated by the force acting from the shaft member 31 is maximized (i.e., portion having the highest temperature) is on the +X side from the axis Ax of the bearing 42. Therefore, the connection member 44 is located on the +X side from the axis Ax of the bearing 42 in the housing 41 regardless of the attitude of the machine component 40. Note that the machine component 40 may be mounted onto the support base 10 in a state where the axis Ax of the bearing 42 extends in the gravity direction.

Further, the connection member 44 may be at any position in the housing 41 regardless of the attitude of the machine component 40 and the direction of the load acting on the bearing 42 from the shaft member 31.

The connection member 44 may be in contact with the bearing 42. For example, in FIG. 3, when the housing 41 covers the front surface S2 of the bearing 42, the connection member 44 may contact the front surface S2 of the bearing 42.

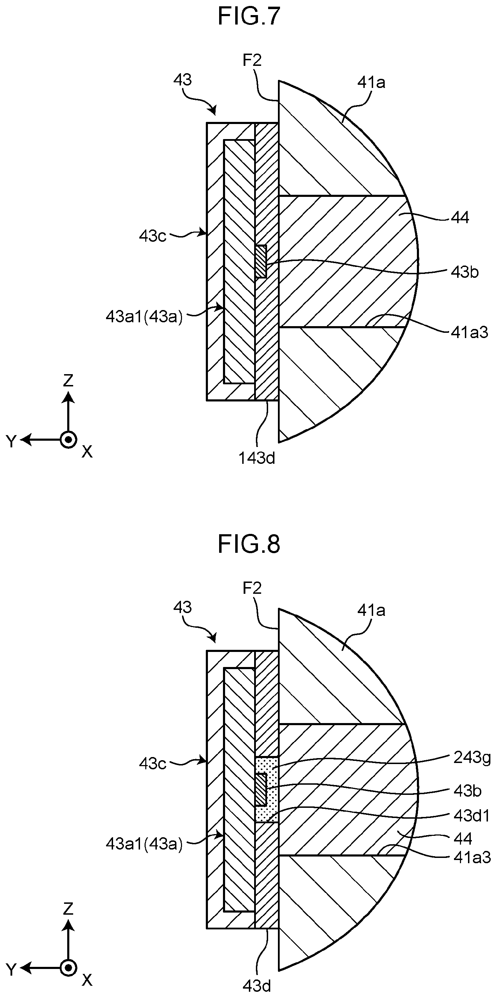

FIG. 7 is a cross-sectional view of the temperature detector 43 in the machine component 40 according to a first modification of the embodiment of the present disclosure. In the first modification, an adhesive member 143d does not have the third through hole 43d1. The adhesive member 143d covers the entire RFID tag 43a. As a result, the temperature sensor 43b is covered with the adhesive member 143d. The temperature sensor 43b and the bearing 42 are thermally connected via the adhesive member 143d and the connection member 44. The adhesive member 143d may contain particles of Ag or the like having a relatively high thermal conductivity.

FIG. 8 is a cross-sectional view of the temperature detector 43 in the machine component 40 according to a second modification of the embodiment of the present disclosure. In the second modification, the third through hole 43d1 is filled with a thermal conductive grease 243g. The temperature sensor 43b and the connection member 44 are thermally connected via the thermal conductive grease 243g.

The thermal conductive grease 243g is, for example, a silicon-based thermal conductive grease. It is apparent that the thermal conductive grease 243g is not limited to the silicon-based grease as long as the grease is in paste form. The thermal conductive grease 243g may be a thermosetting resin (e.g., epoxy resin) containing particles of Ag or the like having a relatively high thermal conductivity.

The thermal conductivity of the thermal conductive grease 243g is higher than the thermal conductivity of the housing 41. The thermal conductivity of the thermal conductive grease 243g is approximately from 80 (W/m•K) to 180 (W/m•K). The thermal conductive grease 243g may also be interposed between the hole 41a3 and the connection member 44.

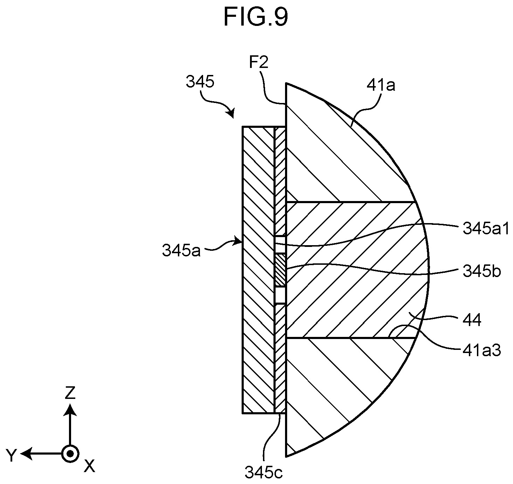

FIG. 9 is a cross-sectional view of a temperature detector 345 in the machine component 40 according to a third modification of the embodiment of the present disclosure. The temperature detector 345 according to the second modification does not include the RFID tag 43a and the cover 43c. The temperature detector 345 according to the third modification includes a substrate 345a, a temperature sensor 345b, and an adhesive member 345c. The temperature sensor 345b is disposed on a main surface 345a1 of the substrate 345a. The substrate 345a includes a terminal that outputs a temperature detected by the temperature sensor 345b.

In this case, the monitoring system 1 does not include the reader writer 3, and the terminal device 4 is electrically connected to the terminal of the substrate 345a to acquire a detection temperature of the temperature sensor 345b. Note that the substrate 345a may include a display unit that displays the detected temperature of the temperature sensor 345b. In this case, the user may check the detected temperature of the temperature sensor 345b on the display unit and input the temperature to the terminal device 4.

The adhesive member 345c bonds the substrate 345a to the housing 41. The adhesive member 345c is, for example, a double-sided tape. Note that the temperature detector 345 may include a cover that protects the substrate 345a.

### Reference Signs List

1 MONITORING SYSTEM
2 MACHINE DEVICE
3 READER WRITER
4 TERMINAL DEVICE
10 SUPPORT BASE
31 SHAFT MEMBER
40 MACHINE COMPONENT
41 HOUSING
41a3 HOLE
42 BEARING
43 TEMPERATURE DETECTOR
43a RFID TAG
43b TEMPERATURE SENSOR
44 CONNECTION MEMBER
Ax AXIS OF BEARING

## Claims

1. A machine component further comprising:
a housing;
a bearing that is disposed in the housing and rotatably supports a shaft member;
a temperature sensor that is disposed on an outer surface of the housing and detects a temperature of the bearing; and
a connection member having a thermal conductivity higher than a thermal conductivity of the housing, the connection member being disposed in the housing and thermally connecting the bearing and the temperature sensor.

2. The machine component according to claim 1, wherein
the connection member includes one or more types of metal selected from a group of pure copper, copper, aluminum, duralumin, gold, and silver.

3. The machine component according to claim 1, wherein
when the connection member is viewed from inside the bearing toward outside the bearing in a direction orthogonal to an axis of the bearing, the connection member overlaps with a portion of the bearing where a stress generated by a force acting from the shaft member is maximized.

4. The machine component according to claim 1, comprising
a radio frequency identification (RFID) tag that is configured integrally with the temperature sensor and transmits a detection temperature of the temperature sensor to a reader writer.

5. A monitoring system comprising:
a machine device including a plurality of the machine components according to claim 4;
the reader writer; and
a terminal device that is electrically connected to the reader writer and stores the detection temperature of the temperature sensor.
